# FASCICULE DE BREVET EUROPEEN

(11) **EP 2 817 386 B1**
(45) Date de publication et mention de la délivrance du brevet: **24.05.2017**
(21) Numéro de dépôt: 13701113.6
(22) Date de dépôt: 25.01.2013
(51) Int. Cl.: C09K 8/584, E21B 43/16

(54) **AGENTS DESORBANTS POUR LA RECUPERATION ASSISTEE DU PETROLE**
DESORBANZIEN ZUR ERHÖHTEN ÖLGEWINNUNG
DESORBANTS FOR ENHANCED OIL RECOVERY

(30) Priorité: 25.01.2012 FR 1200216
(43) Date de publication de la demande: 31.12.2014
(73) Titulaire: Rhodia Operations, 75009 Paris (FR); Institut Français du Pétrole, 92500 Rueil-Malmaison (FR)
(72) Inventeur: MORVAN, Mikel, 33600 Pessac (FR); MOREAU, Patrick, 33000 Bordeaux (FR); TABARY, René, 78100 Saint Germain en Laye (FR); BAZIN, Brigitte, 75017 Paris (FR)
(74) Mandataire: Cordier, Pascal Christian
(86) Numéro de dépôt international: PCT/EP2013/051464
(87) Numéro de publication internationale: WO 2013/110774

(56) Documents cités:
- US-A- 3 799 264
- US-A- 4 276 933
- US-A- 4 448 697
- L. MINSSIEUX: "Method for adsorption reduction of mixed surfactant systems", JOURNAL OF PETROLEUM SCIENCE AND ENGINEERING, vol. 2, no. 2-3, 1 April 1989 (1989-04-01) , pages 235-244, XP055210891, ISSN: 0920-4105, DOI: 10.1016/0920-4105(89)90069-7
- LOUIS MINSSIEUX: "Surfactant Flooding With Hard Water~ A Case Study Solved by HLB Gradient", SPE RESERVOIR ENGINEERING, vol. 2, no. 4, 1 November 1987 (1987-11-01), pages 605-612, XP055210913,

## Description

La présente invention a trait au domaine de la récupération assistée du pétrole brut des formations souterraines, et plus particulièrement aux problématiques de rétention des tensioactifs dans ces formations souterraines lors d'étapes de récupération assistée du pétrole.

Lors de l'extraction du pétrole hors d'un réservoir hydrocarboné (réservoir pétrolifère telle qu'une formation rocheuse, consolidée ou non, ou un sable, par exemple), selon une première étape dite de « récupération primaire », le pétrole est entraîné hors d'un puits de production par la surpression régnant naturellement au sein du réservoir. Cette récupération primaire ne permet d'accéder qu'à une faible quantité du pétrole contenu dans le réservoir, typiquement de l'ordre de 10 à 15% tout au plus.

Pour permettre de poursuivre l'extraction du pétrole suite à cette récupération primaire, des méthodes secondaires de production sont employées, quand la pression du réservoir devient insuffisante pour déplacer le pétrole encore en place. Typiquement, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le(s) puits de production. Une technique usuelle dans ce cadre est l'injection d'eau (désignée également par inondation ou « waterflooding »), dans laquelle de grands volumes d'eau sont injectés sous pression dans le réservoir via des puits d'injecteurs. L'eau injectée entraîne une partie du pétrole qu'elle rencontre et le pousse vers un ou plusieurs puits producteur(s). Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il a été proposé différentes techniques dites de « récupération assistée du pétrole » (ou récupération assistée (ou améliorée) d'hydrocarbures RAH), ou bien encore « EOR » (pour l'anglais « *Enhanced Oil Recovery* »). Parmi ces techniques, on peut citer des techniques s'apparentant à l'injection d'eau (inondation) précitée, mais employant une eau comprenant des additifs tels que, par exemple, des agents tensioactifs solubles dans l'eau (on parle alors typiquement de « *surfactant flooding* »). L'emploi de tels agents tensioactifs induit notamment une diminution de la tension interfaciale eau/pétrole, qui est propre à assurer un entraînement plus efficace du pétrole piégé dans les constrictions de pores.

Les tensioactifs usuellement préconisés dans ce cadre sont typiquement des tensioactifs anioniques, notamment de type sulfate ou sulfonate. Bien qu'ils s'avèrent effectivement efficaces pour abaisser la tension interfaciale eau/pétrole, ces tensioactifs anioniques présentent un inconvénient, à savoir qu'ils tendent à rester piégés au sein des formations souterraines, typiquement compte tenus de phénomènes d'adsorption chimique à la surface des roches, ce qui affecte de façon notable l'efficacité de la récupération et/ou les coûts de procédé.

Entre autres, les tensioactifs ainsi immobilisés au sein du réservoir ne peuvent plus participer à la mobilisation du pétrole et à son extraction, et l'efficacité de l'extraction se trouve dès lors affectée. Une forte adsorption peut être compensée par la mise en oeuvre de concentrations élevées de tensioactifs mais avec des répercussions en termes de coûts. Plus généralement, les phénomènes d'adsorption des tensioactifs impactent négativement les coûts de l'extraction.

Les phénomènes d'adsorption des tensioactifs anioniques précités sont tout particulièrement nets :
- lorsqu'on emploie les tensioactifs au sein d'une eau à fortes teneurs en sel et/ou en cations divalents (eau de mer notamment) ; et
- dans certaines formations rocheuses, telles que les carbonates ou les roches argileuses comme des grès argileux (où l'adsorption est élevée, même si on évite des eaux à fortes teneurs en sel et/ou en ions divalents).

Pour inhiber les phénomènes d'adsorption des tensioactifs, il a été proposé différentes solutions plus ou moins efficaces et généralement limitées à des conditions de mise en oeuvre spécifiques.

Ainsi, en particulier, il a été proposé la mise en oeuvre d'agents sacrificiels, censés présenter une affinité plus grande pour la roche que les espèces tensioactives employées pour la récupération assistée de pétrole. Dans ce cadre, il a été décrit l'emploi possible de lignosulfonates ou de poly(oxyde d'éthylène) de faible masse moléculaire, dont l'efficacité est variable, en fonction notamment de la nature des tensioactifs, de la roche et des conditions de salinité.

US 4 276 933 décrit l'emploi d'un agent non ionique, en post-addition (postflush), pour réduire la retention de tensioactifs. Un effet de désorption similaire, par post-addition d'un phenol ethoxylé est décrit dans le Journal of Petroleum Science and Engineering (vol 2, no. 2-3, 1 avril 1989, pp. 235-244).

Un but de la présente invention est de fournir un moyen efficace de limiter, voire de s'affranchir des effets néfastes de la rétention des tensioactifs anioniques, notamment de type sulfates et/ou sulfonates, au sein de réservoirs pétrolifères lors d'étapes de récupération assistée du pétrole, et ce tout particulièrement dans des roches pétrolifères de type carbonate ou roches argileuses.

A cet effet, la présente invention propose l'utilisation d'au moins un tensioactif non ionique choisi parmi les composés de formule (I) suivante :

**R-O-(-CH₂-CH(-CH₃)-O-)ₘ-(-CH₂-CH₂-O-)ₙ-H** **(I)**

dans laquelle :
R est un groupe dodécyle -(CH₂)₁₁-(CH₃) ;
m est un nombre allant de 0 à 20, entier ou non, m désignant le nombre (ou le cas échéant, le nombre moyen) d'unités oxyde de propylène -CH₂-CH(-CH₃)O- ;
n est un nombre supérieur à m et qui compris entre 5 et 40, par exemple entre 6 et 30 , entier ou non, n désignant le nombre (ou le cas échéant, le nombre moyen) d'unités oxyde d'éthylène -CH₂-CH₂-O-,
pour inhiber les phénomènes de rétention de tensioactifs anioniques au sein d'un réservoir pétrolifère.

Les travaux réalisés par les inventeurs dans le cadre de la présente invention ont maintenant permis de mettre en évidence que les composés de formule (I) précités sont des agents hydrosolubles qui présentent la propriété particulièrement intéressante de désorber les tensioactifs anioniques lorsqu'ils sont injectés en solution aqueuse dans des roches (réservoirs pétrolifères) où ces tensioactifs anioniques ont été préalablement adsorbés. En ce sens, les composés de formule (I) peuvent être qualifiés d'agents désorbants des tensioactifs anioniques.

Les composés de formule (I) permettent en particulier de désorber de façon particulièrement efficace des tensioactifs anioniques de type sulfate et/ou sulfonate des roches pétrolifères, notamment des mélanges de tensioactifs primaires de type oléfine sulfonate ou alkylarylsulfonate et secondaires de type alkyl ether sulfate ou alkyl ether glyceryl sulfonate.

Plus généralement, les composés de formule (I) peuvent désorber la plupart des tensioactifs anioniques employés pour la récupération assistée de pétrole, notamment des tensioactifs anioniques de type carboxylate, phosphates et/ou phosphonate .

Au sens de la présente invention, la notion de «tensioactif anionique englobe tous les tensioactifs porteurs d'au moins un groupe anionique dans les conditions de l'extraction réalisée. Ainsi, un tensioactif anionique englobe non seulement des sulfates et sulfonates précités, mais également d'autres types de tensioactifs, incluant les tensioactifs à caractère zwitterionique. Les composés de formule (I) sont bien adaptés à la désorption de tensioactifs purement anioniques (à savoir porteurs non porteurs de charges positives). Cela étant, selon un mode de réalisation spécifique, les composés de formule (I) peuvent éventuellement être employés pour désorber des composés à caractère zwitterioniques (seuls ou mélangés à des tensioactifs purement anioniques).

Les composés de formule (I) peuvent par ailleurs inhiber l'effet de rétention des tensioactifs anioniques, notamment du type précité, lorsqu'ils sont introduits conjointement auxdits tensioactifs anioniques. En ce sens, ils peuvent également être considérés comme des agents anti-rétention des tensioactifs anioniques au sein de roches pétrolifères (réservoirs pétrolifères). Dans ce cadre, les composés de formule (I) peuvent en particulier être employés pour éviter la rétention des agents tensio-actifs anioniques aussi bien lorsque ceux-ci sont employé sous la forme d'un liquide d'extraction que lorsqu'ils sont sous la forme d'une mousse (obtenue par injection du tensioactif anionique et du composé de formule (I) en milieu aqueux dans la roche pétrolifère puis injection d'un gaz, typiquement selon le procédé dit « WAG »). Les composés de formule (I) sont notamment propres à améliorer l'effet de la mousse, en évitant des phénomènes de rétention dans la roche.

Par ailleurs, lorsqu'ils sont introduits au sein de roches pétrolifères (réservoirs pétrolifères) préalablement à l'injection de tensioactifs anioniques, notamment du type précité, les composés de formule (I) permettent de prévenir l'effet de rétention des tensioactifs anioniques, en limitant la quantité de tensioactifs anioniques qui s'adsorbe sur la roche. En cela, les composés de formule (I) peuvent également être décrits comme des agents sacrificiels.

De façon surprenante, il s'avère de plus que ces différentes propriétés sont obtenues aussi bien à de faibles teneurs en sels et en cations divalents qu'à forte teneur en ces sels ou cations (notamment en employant de l'eau de mer comme solvant des tensioactifs), et ce y compris dans des roches de type carbonates ou grès argileux.

De plus, les effets observés dans le cadre de la présente invention n'impliquent pas des concentrations élevées en composé de formule (I). Typiquement, dans le cadre de la présente invention, les composés de formule (I) sont employés - seuls ou sous forme d'un mélange de plusieurs tensio-actifs non ioniques de formule (I) - dans des fluides aqueux comprenant ces composés à une concentration qui n'a pas à dépasser 5 g/L, et qui peut par exemple être comprise entre 0,1 et 4g/L, de préférence entre 0,5 et 2 g/L.

De préférence, les composé de formule (I) sont utilisés dans le cadre de la présente invention au moins :
- à titre d'agents anti-rétention des tensioactifs anioniques (ils sont alors introduits au moins pour partie conjointement auxdits tensioactifs anioniques) ;
   et/ou
- à titre d'agents sacrificiels (ils sont alors introduits au moins pour partie préalablement auxdits tensioactifs anioniques).

Selon une variante possible, les composés de formule (I) sont utilisés à titre d'agents anti-rétention des tensioactifs anioniques puis d'agents désorbants des tensioactifs anioniques : ils sont alors introduits, pour une première partie, conjointement auxdits tensioactifs anioniques, puis, pour une deuxième partie, postérieurement à l'introduction des tensioactifs, étant entendu que ladite deuxième partie peut comprendre des composés de formule (I) identiques ou différents de ceux de la première partie. Les composés de formule (I) assurent ainsi à la fois un effet préventif de la rétention, et, au besoin, un effet correctif. Dans le cadre de cette variante, pour améliorer l'aspect préventif, on peut en outre, au besoin, utiliser les composés de formule (I) à titre d'agents sacrificiels, à savoir en les injectant pour partie préalablement à l'injection des tensioactifs anioniques.

Outre les avantages précités, les composés de formule (I) utiles selon l'invention peuvent au moins dans certains cas améliorer la solubilité dans l'eau d'agents tensioactifs anioniques, notamment de type sulfates ou sulfonate. Les composés de formule (I) permettent en cela d'améliorer l'injectivité de certains tensioactifs anioniques, notamment des mélanges de tensioactifs primaires de type oléfine sulfonate ou alkylarylsulfonate et secondaires de type alkyl éther sulfate ou sulfonate, lorsqu'ils sont ajoutés conjointement à ces tensioactifs.

De plus, l'emploi des composés de formule (I), qui sont des tensioactifs non ioniques, est de nature à pouvoir améliorer la compatibilité des tensioactifs anioniques, notamment de type sulfonate, avec d'autres composés qui sont employés en EOR, tels que par exemple des polymères viscosants comme des polyacrylamides partiellement hydrolysés, par exemple, ce qui constitue encore un autre avantage des composés de formule (I).

Selon un mode de réalisation intéressant, les composés de formule (I) sont utilisés conjointement à au moins un polymère viscosant. Selon ce mode de réalisation, l'effet d'inhibition des phénomènes de rétention de tensioactifs anioniques ou leur désorption se révèle en général tout particulièrement intéressant. Le plus souvent, on observe un effet amélioré en présence du polymère additionnel, voire un effet de synergie dans certains cas (l'effet d'inhibition de la rétention des tensioactifs sur la roche est en général plus important que la simple addition de l'effet observé en présence d'un composé (I) sans polymère et de l'effet observé en présence du polymère sans le composé de formule (I). Un tel effet de synergie est par exemple observé, notamment pour les tensioactifs ou formulations de type sulfate ou sulfonate, en employant des polymères additionnels qui sont choisis parmi les polyacrylamides, de préférence partiellement hydrolysés.

Les composés de formule (I) peuvent notamment être utilisés conjointement à des polymères viscosants choisis parmi :
- les polymères hydrophiles incluant les homo-, les co-, ou les ter- polymères tels que, par exemple, des polymères de type acrylate d'alkyle, modifié ou non, éventuellement porteurs de substituants tels que des groupes acide 2-acrylamido-2methyl propane sulfonique, N,N-diméthylacrylamide, vinylpyrrolidone, méthacrylate de diméthylaminethyle, acide acrylique, acétate de vinyle, acide vinylsulfonique, ou acide methacrylique.
- les biopolymères tels que les guars ou la gomme xanthane, par exemple.

Des composés de formule (I) intéressants incluent notamment le Rhodasurf ^{®} LA 12 commercialisé par la société Rhodia. Alternativement, on peut employer le Rhodasurf^{®} LA 9 également disponible auprès de Rhodia.

De préférence, les composés de formule (I) précités sont employés pour inhiber les phénomènes de rétention de tensioactifs anioniques choisis parmi :
- les agents anioniques de type sulfonate et/ou sulfate ;
- les mélanges de tensioactifs anioniques comprenant un ou plusieurs agents anioniques de type sulfonate et/ou sulfate, ces mélanges pouvant ou non comprendre des tensioactifs non ioniques.

Selon un aspect plus spécifique, la présente invention a pour objet les procédés de récupération assistée du pétrole d'une formation souterraine, qui mettent à profit l'emploi précité des composés de formule (I).

Ainsi, selon un premier mode de réalisation intéressant, la présente invention a notamment pour objet un procédé de récupération assistée du pétrole d'une formation souterraine, dans lequel :
(i) on injecte dans ladite formation souterraine, par au moins un puits d'injection, un fluide comprenant au moins un milieu aqueux, un tensioactif anionique, et éventuellement un co-tensioactif anionique (ce fluide étant typiquement exempt de tensioactif non ionique) ; puis
(ii) on injecte ensuite par le ou les même(s) puits d'injection un fluide comprenant un composé de formule (I) du type précité ; et
(iii) on récupère, par au moins un moyen de production, ledit fluide véhiculant le pétrole sortant de la formation souterraine.

Selon une variante préférée de ce premier mode de réalisation, le fluide comprenant le tensioactif anionique qui est employé dans l'étape (i) peut avantageusement comprendre un composé de formule (I) identique ou différent de celui employé dans le fluide de l'étape (ii). Les composés de formule (I) sont alors utilisés à la fois à titre d'agents anti-rétention et d'agents désorbants.

Selon une autre variante du premier mode de réalisation, qu'on peut au besoin combiner avec celle du paragraphe précédent, on peut injecter un fluide comprenant un composé de formule (I) préalablement à l'étape (i), ce par quoi les composés de formule (I) sont utilisés à la fois à titre d'agents sacrificiels et d' agents anti-rétention des tensioactifs anioniques.

Selon un autre mode de réalisation intéressant, la présente invention a pour objet un procédé de récupération assistée du pétrole d'une formation souterraine, dans lequel :
- on injecte dans ladite formation souterraine, par au moins un puits d'injection, un fluide comprenant au moins un milieu aqueux, un tensioactif anionique, et éventuellement un co-tensioactif anionique (ce fluide étant typiquement exempt de tensioactif non ionique) et un composé de formule (I) du type précité ; puis
- on récupère, par au moins un moyen de production, ledit fluide véhiculant le pétrole sortant de la formation souterraine.

Le composé de formule (I) est alors employé à titre d'agent anti-rétention des tensioactifs anioniques. Là encore, selon une variante possible, on peut éventuellement injecter préalablement et/ou postérieurement à l'injection du fluide comprenant les tensioactifs anionique et l'agent anti-rétention, ce par quoi les composés de formule (I) serviront en outre pour partie, respectivement à titre d'agents sacrificiels et/ou d'agents désorbants des tensioactifs anioniques.

Selon encore un autre mode de réalisation intéressant, la présente invention a pour objet un procédé de récupération assistée du pétrole d'une formation souterraine, dans lequel :
(i) on injecte dans ladite formation souterraine, par au moins un puits d'injection, un fluide comprenant un composé de formule (I) du type précité, puis
(ii) on introduit un fluide comprenant au moins un milieu aqueux, un tensioactif anionique, et éventuellement un co-tensioactif anionique (ce fluide étant typiquement exempt de tensioactif non ionique) ; puis
(iii) on récupère, par au moins un moyen de production, ledit fluide véhiculant le pétrole sortant de la formation souterraine.

Le composé de formule (I) est alors employé à titre d'agent sacrificiel. Selon une variante intéressante de ce mode de réalisation, le fluide employé dans l'étape (ii) peut comprendre un composé de formule (I) identique ou différent de celui employé dans l'étape (i), ce par quoi les composés de formule (I) assurent à la fois le rôle d'agents sacrificiels et d'agents anti-rétention des tensioactifs anioniques . Alternativement ou en complément, on peut introduire un fluide comprenant un composé de formule (I), identique ou différent de ceux employé dans l'étape (i) et, le cas échéant, l'étape (ii), ce par quoi les composés de formule (I) serevent en outre à titre d'agent désorbant des tensioactifs anioniques.

Les différentes variantes des procédés de l'invention peuvent avantageusement être mis en oeuvre pour la récupération assistée du pétrole dans des formations souterraines qui sont des roches carbonatées ou argileuses (grès argileux notamment), consolidées ou non. Cela étant, l'invention ne saurait se limiter à de tels réservoirs uniquement.

Les exemples ci-après illustrent un mode de réalisation non limitatif de l'invention et des avantages afférents aux composés de formule (I).

### EXEMPLE 1

### Adsorption statique

Cet exemple illustre l'effet des composés de formule (I) sur l'adsorption d'une formulation de tensioactifs anioniques (mélange d'oléfine sulfonate de sodium et d'alkyl ether sulfate) sur différents types de roches.

La formulation de tensioactifs anioniques employée dans cet exemple a été préparée dans une saumure de forte dureté, à savoir contenant 35000 ppm de sels dissous dont 3000 ppm de cations divalents (calcium et magnésium).

L'adsorption a été mesurée par une méthode classique sur différents types de roche broyée (grès de Clashach, Calcaire de Lavoux, Dolomite), en référence à la surface spécifique de la roche, déterminée par la méthode BET au Krypton, en itroduisant la roche broyé dans la saumure avec un rapport massique roche/saumure concentration en solide est de 20% en poids (2g de roche dans 10 g de saumure) avec une concentration en tensioactif anionique dans la saumure de 2 g/L.

L'adsorption de la formulation a d'abord été mesurée en l'absence de tout additif (référence), puis en ajoutant différents agents dans la formulation.

Les résultats obtenus sont reportés dans le tableau 1 ci-dessous, où l'adsorption est exprimée en mg de tensioactifs anioniques par mètres carrés de surface rocheuse.

**Tableau 1 :**

| **Agent ajouté à la saumure** | **adsorption (mg/m²)** | | |
|---|---|---|---|
| | Clashach | **Lavoux** | **Dolomite** |
| Aucun (témoin) | 3,5 | **6,2** | **5,3** |
| Rhodasurf^{®} LA12 - 2g/L | 1,9 | **3,8** | **4** |
| Composé de formule I où m=0, n=21 et R=alkyle en C10-12 | 1,1 | **3,2** | **3.9** |

### EXEMPLE 2

### Utilisation d'un composé de formule (I) pour une récupération assistée d'hydrocarbure

Dans cet exemple, du Rhodasurf^{®} LA12 a été employé à titre d'agent désorbant dans une expérience reproduisant les condition d'une récupération assistée de pétrole (expérience de récupération tertiaire), en employant la même saumure que dans l'exemple 1.

Pour ce faire, un échantillon de roche (carotte de grès de Clashach) a été placé en conditions représentative d'un réservoir pétrolier mature (état dit de saturation résiduelle en huile) selon une méthodologie connue.

On a ensuite opéré une récupération assistée (tertiaire) dans les condition suivantes :
(i) injection d'une solution d'un tensioactif (mélange d'oléfine sulfonate de sodium et d'alkyl ether sulfate - 8 g/L) et d'un polymère (Flopaan 3330S commercialisé par SNF - 2 g/L), avec une injection totale de 0,5 volumes de pores (0,5 PV) de cette formulation ; puis
(ii) injection de 1.5 PV de solution comprenant le polymère (2 g/L) et 2g/L de Rhodasurf ^{®} LA12
(iii) injection de 2 PV de saumure.

A titre de comparaison, on a reproduit la même expérience à la différence que la solution de l'étape (ii) contenant uniquement le polymère (sans Rhodasurf ^{®} LA12).

Les quantités d'huile extraite dans chacune des deux expériences (avec et sans emploi de Rhodasurf ^{®} LA12) sont reportées dans le tableau ci-après.

La quantité d'huile extraite est exprimée en pourcentage de l'huile résiduelle après balayage à l'eau (%ROIP).

Le tableau 2 ci-dessous reporte également l'adsorption du tensioactif, déterminée par différence entre la quantité injectée et la quantité récupérée en sortie de la roche. Elle est exprimée en mg de tensioactifs anioniques par gramme de roche.

**Tableau 2 :**

| **Expérience** | **adsorption (mg/g)** | **%ROIP** |
|---|---|---|
| sans Rhodasurf ^{®} LA12 | 0,51 | 33% |
| avec Rhodasurf ^{®} LA12 | 0,2 | 87% |

### EXEMPLE 3

### Utilisation d'un composé de formule (I) pour une récupération assistée d'hydrocarbure

Dans cet exemple, du Rhodasurf® LA12 a été employé dans une expérience reproduisant les conditions d'une récupération assistée de pétrole (expérience de récupération tertiaire), en employant la même saumure que dans l'exemple 2.

Pour ce faire, comme dans l'exemple précédent un échantillon de roche (carotte) a été placé en conditions représentative d'un réservoir pétrolier mature (état dit de saturation résiduelle en huile) selon une méthodologie connue. A la différence de l'expérience précédente, l'huile utilisée dans cet exemple est une huile réservoir (pétrole).

On a ensuite opéré une récupération assistée (tertiaire) dans les conditions suivantes :
(i) injection d'une solution d'un tensioactif (mélange d'oléfine sulfonate de sodium et d'alkyl ether sulfate - 8 g/L) et d'un polymère (Flopaan 3330S commercialisé par SNF - 2 g/L), ainsi que 0.3 g/L de Rhodasurf LA12. Une injection totale de 0,5 volumes de pores (0,5 PV) de cette formulation ; puis
(ii) injection de 1.5 PV de solution comprenant le polymère (2 g/L) et 2 g/L de Rhodasurf LA12
(iii) injection de 2 PV de saumure.

A titre de comparaison, on a reproduit la même expérience à la différence que les solutions de l'étape (i) et de l'étape (ii) ne contenaient pas de Rhodasurf LA12 (voir exemple 2).

Les quantités d'huile extraite dans chacune des deux expériences (avec et sans emploi de Rhodasurf LA12) sont reportées dans le tableau ci-après.

La quantité d'huile extraite est exprimée en pourcentage de l'huile résiduelle après balayage à l'eau (%ROIP).

Le tableau 3 ci-après reporte également l'adsorption du tensioactif, déterminée par différence entre la quantité injectée et la quantité récupérée en sortie de la roche. Elle est exprimée en mg de tensioactifs anioniques par gramme de roche.

**Tableau 3 :**

| Expérience | Adsorption (mg/g) | %ROIP |
|---|---|---|
| sans Rhodasurf LA12 | 0,55 | 20.8% |
| avec Rhodasurf LA12 | 0,23 | 53% |

### EXEMPLE 4

### Utilisation d'un composé de formule (I) pour une récupération assistée d'hydrocarbure

Dans cet exemple, du Rhodasurf® LA12 a été employé à titre d'agent désorbant dans une expérience reproduisant les conditions d'une récupération assistée de pétrole (expérience de récupération tertiaire) pour des réservoirs carbonatés, pour lesquel l'adsorption des tensioactifs anioniques est particulièrement élevée. Du calcaire de Lavoux est utilisé comme roche représentative. La saumure est une solution de chlorure de sodium (72 g/L).

Pour ce faire, un échantillon de roche (carotte) a été placé en conditions représentative d'un réservoir pétrolier mature (état dit de saturation résiduelle en huile) selon une méthodologie connue.

On a ensuite opéré une récupération assistée (tertiaire) dans les conditions suivantes :
(i) injection d'une solution d'un tensioactif (mélange d'oléfine sulfonate de sodium et d'alkyl ether sulfate - 8 g/L) et d'un polymère (Flopaan 3330S commercialisé par SNF - 2 g/L), ainsi que 1 g/L de Rhodasurf LA12. Une injection totale de 0,8 volumes de pores (0,5 PV) de cette formulation ; puis
(ii) injection de 1.5 PV de solution comprenant le polymère (2 g/L) et 2 g/L de Rhodasurf LA12
(iii) injection de 2 PV de saumure.

A titre de comparaison, on a reproduit la même expérience à la différence que la solution de l'étape (i) ne contenait pas de Rhodasurf LA12.

Les quantités d'huile extraite dans chacune des deux expériences (avec et sans emploi de Rhodasurf LA12) sont reportées dans le tableau ci-après.

La quantité d'huile extraite est exprimée en pourcentage de l'huile résiduelle après balayage à l'eau (%ROIP).

Le tableau 4 ci-après reporte également l'adsorption du tensioactif, déterminée par différence entre la quantité injectée et la quantité récupérée en sortie de la roche. Elle est exprimée en mg de tensioactifs anioniques par gramme de roche.

**Tableau 4 :**

| Expérience | adsorption (mg/g) | %ROIP |
|---|---|---|
| sans Rhodasurf LA12 | 0,57 | 16% |
| avec Rhodasurf LA12 | 0,42 | 38.4% |

## Revendications

1. Utilisation d'au moins un tensioactif non ionique choisi parmi les composés de formule (I) suivante :
R-O-(-CH₂-CH(-CH₃)-4-)ₘ-(-CH₂-CH₂-O-)n-H (I)
dans laquelle:
R est un groupe dodécyle -(CH₂)₁₁-(CH₃) ;
m est un nombre allant de 0 à 20 ;
n est un nombre supérieur à m et compris entre 5 et 40, par exemple entre 6 et 30, pour inhiber les phénomènes de rétention de tensioactifs anioniques au sein d'un réservoir pétrolifère, notamment au sein d'un réservoir carbonaté ou argileux.

2. Utilisation selon la revendication 1 où le composé de formule (I) est utilisé au moins:
- à titre d'agent anti-rétention desdits tensioactifs anioniques, introduit au moins pour partie conjointement auxdits tensioactifs anioniques ;
et/ou
- à titre d'agent sacrificiel, introduit au moins pour partie préalablement auxdits tensioactifs anioniques.

3. Utilisation selon la revendication 1 ou 2, où le tensio-actif non ionique de formule (I) est utilisé pour désorber des tensioactifs anioniques préalablement piégés dans le réservoir, le tensioactif non ionique de formule (I) étant injecté en solution aqueuse dans un réservoir pétrolifère où ces tensioactifs anioniques ont été préalablement adsorbés.

4. Utilisation selon la revendication 3, où les tensioactifs anioniques sont :
- des agents anioniques de type sulfonate et/ou sulfate ;
- des mélanges de tensioactifs anioniques comprenant un ou plusieurs agents anioniques de type sulfonate et/ou sulfate, ces mélanges ne comprenant, de préférence, pas de tensioactifs non ioniques.

5. Utilisation selon la revendication 3, où les tensioactifs anioniques sont des tensioactifs de type carboxylate, phosphates et/ou phophonate, ou des tensioactifs à caractère zwitterionique.

6. Utilisation selon la revendication 1, où le tensio-actif non ionique de formule (I) est introduit conjointement auxdits tensioactifs anioniques, et est utilisé à titre d'agent anti-rétention des tensioactifs anioniques au sein du réservoir pétrolifère.

7. Utilisation selon la revendication 1, où le tensio-actif non ionique de formule (I) est introduit au sein du réservoir préalablement à l'injection de tensioactifs anioniques, à titre d'agent sacrificiel, à savoir pour prévenir l'effet de rétention des tensioactifs anioniques, en limitant la quantité de tensioactifs anioniques qui s'adsorbent..

8. Utilisation selon l'une des revendications 1 à 7, où le tensio-actif non ionique de formule (I) ou le mélange de tensio-actifs non ioniques de formule (I) est employé dans un fluide aqueux à une concentration inférieure 5 g/L, par exemple comprise entre 0,1 et 4g/L, de préférence entre 0,5 et 2 g/L.

9. Utilisation selon l'une des revendications 1 à 8, où le tensio-actif non ionique de formule (I) est employé conjointement à au moins un polymère viscosants, par exemple un polyacrylamide partiellement hydrolysé.

10. Utilisation selon l'une des revendications 1 à 9, où le nombre n d'unités éthoxylées dans le tensio-actif non ionique de formule (I) va de 10 à 24.

11. Procédé de récupération assistée du pétrole d'une formation souterraine mettant en oeuvre l'utilisation selon la revendication 1, dans lequel :
- on injecte dans ladite formation souterraine, par au moins un puits d'injection, un fluide comprenant au moins un milieu aqueux, un tensioactif anionique, et éventuellement un co-tensioactif anionique ; puis
- on injecte ensuite par le ou les même(s) puits d'injection un fluide comprenant un composé de formule (I) tel que défini dans la revendication 1 ; et
- on récupère, par au moins un moyen de production, ledit fluide véhiculant le pétrole sortant de la formation souterraine.

12. Procédé de récupération assistée du pétrole d'une formation souterraine mettant en oeuvre l'utilisation selon la revendication 1, dans lequel :
- on injecte dans ladite formation souterraine, par au moins un puits d'injection, un fluide comprenant au moins un milieu aqueux, un tensioactif anionique, et éventuellement un co-tensioactif anionique, ce fluide étant de préférence exempt de tensioactif non ionique, et un composé de formule (I) tel que défini dans la revendication 1 ; puis
- on récupère, par au moins un moyen de production, ledit fluide véhiculant le pétrole sortant de la formation souterraine.

13. Procédé de récupération de récupération assistée du pétrole d'une formation souterraine mettant en oeuvre l'utilisation selon la revendication 1, dans lequel :
- on injecte dans ladite formation souterraine, par au moins un puits d'injection, un fluide comprenant un composé de formule (I) tel que défini dans la revendication 1, puis
- on introduit un fluide comprenant au moins un milieu aqueux, un tensioactif anionique, et éventuellement un co-tensioactif anionique (ce fluide étant typiquement exempt de tensioactif non ionique) ; puis
- on récupère, par au moins un moyen de production, ledit fluide véhiculant le pétrole sortant de la formation souterraine.

14. Procédé selon l'une des revendications 11 à 13, où la formation souterraine est une roche carbonatée ou argileuse.

## Patentansprüche

1. Verwendung mindestens eines nichtionischen Tensids, das aus den Verbindungen der folgenden Formel (I) ausgewählt ist:
R-O-(-CH₂-CH(-CH₃)-O-)ₘ-(-CH₂-CH₂-O-)ₙ-H (I)
wobei:
R für eine Dodecylgruppe -(CH₂)₁₁-(CH₃) steht;
m für eine Zahl im Bereich von 0 bis 20 steht;
n für eine Zahl steht, die größer als m ist und
im Bereich von 5 bis 40, beispielsweise von 6 bis 30, liegt,
um das Phänomen des Zurückbleibens anionischer Tenside in einer Erdöllagerstätte, insbesondere in einer carbonat- oder tonbasierten Lagerstätte, zu hemmen.

2. Verwendung nach Anspruch 1, wobei die Verbindung nach Formel (I) mindestens folgendermaßen verwendet wird:
- als Mittel, das dem Zurückbleiben der anionischen Tenside entgegenwirkt, wobei es mindestens teilweise gemeinsam mit den anionischen Tensiden eingebracht wird;
und/oder
- als nicht rückholbares Mittel, das mindestens teilweise vor den anionischen Tensiden eingebracht wird.

3. Verwendung nach Anspruch 1 oder 2, wobei das nichtionische Tensid der Formel (I) dazu verwendet wird, anionische Tenside zu desorbieren, die zuvor in der Lagerstätte zurückgehalten wurden, wobei das nichtionische Tensid nach Formel (I) in wässriger Lösung in eine Erdöllagerstätte injiziert wird, in welcher die anionischen Tenside zuvor adsorbiert wurden.

4. Verwendung nach Anspruch 3, wobei es sich bei den anionische Tensiden um Folgendes handelt:
- anionische Mittel vom Typ Sulfonat und/oder Sulfat;
- Mischungen anionischer Tenside, die ein oder mehrere anionische Mittel vom Typ Sulfonat und/oder Sulfat umfassen, wobei diese Mischungen vorzugsweise keinerlei nichtionische Tenside umfassen.

5. Verwendung nach Anspruch 3, wobei es sich bei den anionischen Tensiden um Tenside vom Typ Carboxylat, Phosphat und/oder Phosphonat handelt, oder um zwitterionische Tenside.

6. Verwendung nach Anspruch 1, wobei das nichtionische Tensid der Formel (I) gemeinsam mit den anionischen Tensiden eingebracht wird und als Mittel verwendet wird, welches dem Zurückbleiben der anionischen Tenside in der Erdöllagerstätte entgegenwirkt.

7. Verwendung nach Anspruch 1, wobei das nichtionische Tensid der Formel (I) als nicht rückholbares Mittel in die Lagerstätte eingebracht wird, bevor die anionischen Tenside injiziert werden, um nämlich einer rückhaltenden Wirkung auf die anionischen Tenside dadurch vorzubeugen, dass die Menge an anionischen Tensiden beschränkt wird, die eine Adsorption erfahren.

8. Verwendung nach einem der Ansprüche 1 bis 7, wobei das nichtionische Tensid der Formel (I) oder die Mischung nichtionischer Tenside nach Formel (I) in einem wässrigen Fluid mit einer Konzentration zum Einsatz kommt, die weniger als 5 g/L beträgt, wobei sie beispielsweise im Bereich von 0,1 bis 4 g/L, vorzugsweise von 0,5 bis 2 g/L, liegt.

9. Verwendung nach einem der Ansprüche 1 bis 8, wobei das nichtionische Tensid der Formel (I) gemeinsam mit mindestens einem viskositätserhöhenden Polymer, beispielsweise einem teilweise hydrolysierten Polyacrylamid, zum Einsatz kommt.

10. Verwendung nach einem der Ansprüche 1 bis 9, wobei die Anzahl n an ethoxylierten Einheiten in dem nichtionischen Tensid der Formel (I) im Bereich von 10 bis 24 liegt.

11. Verfahren zur tertiären Erdölgewinnung aus einer unterirdischen Formation, wobei die Verwendung nach Anspruch 1 zum Einsatz gebracht wird und wobei:
- über mindestens einen Injektionsschacht ein Fluid in die unterirdische Formation injiziert wird, welches mindestens ein wässriges Medium, ein anionisches Tensid und möglicherweise ein anionisches Co-Tensid umfasst; woraufhin
- anschließend in den/dieselben Injektionsschacht/-schächte ein Fluid injiziert wird, das eine Verbindung der Formel (I) gemäß der Begriffsbestimmung in Anspruch 1 umfasst; und
- mit Hilfe mindestens eines Produktionsmittels das Fluid zurückgewonnen wird, in welchem sich das Erdöl befindet, das aus der unterirdischen Formation stammt.

12. Verfahren zur tertiären Erdölgewinnung aus einer unterirdischen Formation, wobei die Verwendung nach Anspruch 1 zum Einsatz gebracht wird und wobei:
- über mindestens einen Injektionsschacht ein Fluid, das mindestens ein wässriges Medium, ein anionisches Tensid und möglicherweise ein anionisches Co-Tensid umfasst, wobei dieses Fluid vorzugsweise frei von nichtionischen Tensiden ist, und eine Verbindung der Formel (I) gemäß der Begriffsbestimmung in Anspruch 1 in die unterirdische Formation injiziert werden; woraufhin
- mit Hilfe mindestens eines Produktionsmittels das Fluid zurückgewonnen wird, in welchem sich das Erdöl befindet, das aus der unterirdischen Formation stammt.

13. Verfahren zur tertiären Erdölgewinnung Gewinnung aus einer unterirdischen Formation, wobei die Verwendung nach Anspruch 1 zum Einsatz gebracht wird und wobei:
- über mindestens einen Injektionsschacht ein Fluid, das eine Verbindung der Formel (I) gemäß der Begriffsbestimmung in Anspruch 1 umfasst, in die unterirdische Formation injiziert wird, woraufhin
- ein Fluid, das mindestens ein wässriges Medium, ein anionisches Tensid und möglicherweise ein anionisches Co-Tensid umfasst, eingebracht wird (wobei dieses Fluid typischerweise frei von nichtionischen Tensiden ist); woraufhin
- mit Hilfe mindestens eines Produktionsmittels das Fluid zurückgewonnen wird, in welchem sich das Erdöl befindet, das aus der unterirdischen Formation stammt.

14. Verfahren nach einem der Ansprüche 11 bis 13, wobei es sich bei der unterirdischen Formation um carbonat- oder tonbasiertes Gestein handelt.

## Claims

1. Use of at least one nonionic surfactant chosen from the compounds of formula (I) below:
R-O-(-CH₂-CH(-CH₃)-O-)ₘ-(-CH₂-CH₂-O-)ₙ-H (I)
in which:
R is a dodecyl group -(CH₂)₁₁-(CH₃) ;
m is an integer ranging from 0 to 20;
n is a number greater than m and between 5 and 40, for example between 6 and 30,
for inhibiting the phenomena of retention of anionic surfactants in an oil reservoir, especially in a carbonate or clay-containing reservoir.

2. Use according to Claim 1, in which the compound of formula (I) is used at least:
- as an agent for preventing retention of said anionic surfactants, introduced at least partly in combination with said anionic surfactants;
and/or
- as a sacrificial agent, introduced at least partly prior to said anionic surfactants.

3. Use according to Claim 1 or 2, in which the nonionic surfactant of formula (I) is used for desorbing the anionic surfactants trapped beforehand in the reservoir, the nonionic surfactant of formula (I) being injected in aqueous solution into an oil reservoir into which these anionic surfactants have been adsorbed beforehand.

4. Use according to Claim 3, in which the anionic surfactants are:
- anionic agents of sulfonate and/or sulfate type;
- mixtures of anionic surfactants comprising one or more anionic agents of sulfonate and/or sulfate type, these mixtures preferably not comprising nonionic surfactants.

5. Use according to Claim 3, in which the anionic surfactants are surfactants of carboxylate, phosphate and/or phosphonate type, or surfactants of zwitterionic nature.

6. Use according to Claim 1, in which the nonionic surfactant of formula (I) is introduced in combination with said anionic surfactants, and is used as an anionic-surfactant anti-retention agent in the oil reservoir.

7. Use according to Claim 1, in which the nonionic surfactant of formula (I) is introduced into the reservoir prior to the injection of anionic surfactants, as a sacrificial agent, i.e. for preventing the anionic-surfactant retention effect, by limiting the amount of anionic surfactants that become adsorbed.

8. Use according to one of Claims 1 to 7, in which the nonionic surfactant of formula (I) or the mixture of nonionic surfactants of formula (I) is used in an aqueous fluid at a concentration of less than 5 g/L, for example between 0.1 and 4 g/L, preferably between 0.5 and 2 g/L.

9. Use according to one of Claims 1 to 8, in which the nonionic surfactant of formula (I) is used in combination with at least one viscosity-enhancing polymer, for example a partially hydrolysed polyacrylamide.

10. Use according to one of Claims 1 to 9, in which the number n of ethoxyl units in the nonionic surfactant of formula (I) ranges from 10 to 24.

11. Process of enhanced oil recovery from an underground formation involving the use according to Claim 1, in which:
- a fluid comprising at least an aqueous medium, an anionic surfactant and optionally an anionic cosurfactant is injected into said underground formation, via at least one injection well; and then
- a fluid comprising a compound of formula (I) as defined in Claim 1 is subsequently injected via the same injection well(s); and
- said fluid conveying the oil leaving the underground formation is recovered by at least one production means.

12. Process of enhanced oil recovery recovery from an underground formation involving the use according to Claim 1, in which:
- a fluid comprising at least an aqueous medium, an anionic surfactant and optionally an anionic cosurfactant, this fluid preferably being free of nonionic surfactant, and a compound of formula (I) as defined in Claim 1 is injected into said underground formation, via at least one injection well; and then
- said fluid conveying the oil leaving the underground formation is recovered by at least one production means.

13. Process of enhanced oil recovery recovery from an underground formation involving the use according to Claim 1, in which:
- a fluid comprising a compound of formula (I) as defined in Claim 1 is injected into said underground formation, via at least one injection well; and then
- a fluid comprising at least an aqueous medium, an anionic surfactant and optionally an anionic cosurfactant is introduced (this fluid typically being free of nonionic surfactant); and then
- said fluid conveying the oil leaving the underground formation is recovered by at least one production means.

14. Process according to one of Claims 11 to 13, in which the underground formation is a carbonate-based or argillaceous rock.
